# EUROPÄISCHE PATENTSCHRIFT

(11) **EP 4 025 451 B1**
(45) Veröffentlichungstag und Bekanntmachung des Hinweises auf die Patenterteilung: **08.04.2026**
(21) Anmeldenummer: 20803756.4
(22) Anmeldetag: 19.10.2020
(51) Int. Cl.: B60L 5/00, B60L 9/00, B60L 9/02, B60L 9/24, H02J 7/34

(54) **ELEKTRISCH ANTREIBBARES FAHRZEUG, INSBESONDERE SCHIENENFAHRZEUG**
ELECTRICALLY PROPELLED VEHICLE, ESPECIALLY RAILWAY VEHICLE
VÉHICULE À TRACTION ÉLECTRIQUE, EN PARTICULIER VÉHICULE FERROVIAIRE

(30) Priorität: 30.10.2019 DE 102019216731
(43) Veröffentlichungstag der Anmeldung: 13.07.2022
(73) Patentinhaber: Siemens Mobility GmbH, 80997 München (DE)
(72) Erfinder: SCHWARZER, Jens Konstantin, 47809 Krefeld (DE); STÜTZLE, Thorsten, 91058 Erlangen (DE); VOLLE, Rudolf-Gerhard, 47546 Kalkar-Hoennepel (DE)
(74) Vertreter: Siemens Patent Attorneys
(86) Internationale Anmeldenummer: PCT/EP2020/079311
(87) Internationale Veröffentlichungsnummer: WO 2021/083695

(56) Entgegenhaltungen:
- EP-A1- 0 649 769
- CN-A- 110 785 311
- DE-A1- 102016 006 526
- DE-A1- 102017 210 750

## Beschreibung

Die Erfindung bezieht sich auf ein elektrisch antreibbares Fahrzeug, insbesondere Schienenfahrzeug, mit einem Gleichspannungszwischenkreis, einem von dem Gleichspannungszwischenkreis gespeisten fahrzeugeigenen Drehstrombordnetz, zumindest einem über einen Stromrichter gespeisten Antriebsmotor und zumindest einer Kühlmittelpumpe zum Pumpen eines den Stromrichter kühlenden Kühlmittels. Solche Fahrzeuge sind beispielsweise in Form von Hochgeschwindigkeitszügen des Typs Velaro D (DB-Baureihe 407 der Deutschen Bahn) bekannt.

Bei heutigen Fahrzeugen sind die Kühlmittelpumpen, die zum Umpumpen von Kühlmittel zur Kühlung der Stromrichter dienen und nachfolgend auch Stromrichter-Kühlmittelpumpen genannt werden, drehstrombetrieben und zu diesem Zweck mit Drehstrommotoren ausgestattet. Die Drehstrommotoren bzw. die Kühlmittelpumpen sind an das fahrzeugeigene Drehstrombordnetz angeschlossen. Das fahrzeugeigene Drehstrombordnetz weist in der Regel eine 3AC-Zugsammelschiene auf, die üblicherweise durch den gesamten Eisenbahnzug hindurch verläuft. An diese 3AC-Zugsammelschiene sind üblicherweise sämtliche Drehstromverbraucher des Zuges angeschlossen, unter anderem auch die genannten Stromrichter-Kühlmittelpumpen.

Bekannt sind die Dokumente DE 10 2017 210750 A1 sowie DE 10 2016 006526 A1.

Bekanntermaßen lassen sich die Antriebsmotoren von elektrisch antreibbaren Fahrzeugen als elektrodynamische Bremse einsetzen.

Der Erfindung liegt die Aufgabe zugrunde, ein elektrisch antreibbares Fahrzeug anzugeben, bei dem ein elektrodynamisches Bremsen auch im Falle von Schnellbremsungen besonders sicher möglich ist.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass das Fahrzeug zusätzlich zu dem schienenfahrzeugeigenen Drehstrombordnetz ein zweites Bordnetz aufweist und die zumindest eine Kühlmittelpumpe an das zweite Bordnetz angeschlossen ist.

Ein wesentlicher Vorteil des erfindungsgemäßen Fahrzeugs ist darin zu sehen, dass eine elektrische Speisung der Kühlmittelpumpe bzw. Kühlmittelpumpen mittels eines zweiten Bordnetzes erfolgt, das von dem fahrzeugeigenen Drehstrombordnetz vorzugsweise entkoppelt ist und von etwaigen über das Drehstrombordnetz übertragenen Störsignalen kaum oder zumindest nicht signifikant beeinträchtigt wird. Die Erfindung macht sich die Erkenntnis zunutze, dass aufgrund des Anschlusses vieler anderer Komponenten des Fahrzeugs an das Drehstrombordnetz in nicht unerheblichem Maße Störsignale auftreten können, die einen sicheren Betrieb der Kühlmittelpumpen womöglich gefährden. An dieser Stelle setzt die Erfindung an, indem erfindungsgemäß vorgesehen wird, die Kühlmittelpumpen über ein zweites Bordnetz zu speisen. Aufgrund der erfindungsgemäß individuellen Speisung der Kühlmittelpumpen ist in besonders sicherer Weise insbesondere die Kühlung der Leistungshalbleiter der Stromrichter, die während eines elektrodynamischen Bremsvorgangs dauerhaft funktionieren müssen, gewährleistet. Würde die Kühlung ausfallen, würden die Leistungshalbleiter nach kurzer Zeit ihre Grenztemperatur erreichen, also noch während eines Schnellbremsvorgangs, der bei Hochgeschwindigkeitszügen einige Minuten dauern kann; eine solche Gefahrensituation lässt sich bei der erfindungsgemäßen Ausgestaltung vermeiden oder zumindest die Gefahr eines Auftretens einer solchen Gefahrensituation reduzieren.

Das zweite Bordnetz ist erfindungsgemäß ein Gleichspannungsnetz, nachfolgend auch Gleichspannungsbordnetz genannt.

Das zweite Bordnetz wird bevorzugt durch zumindest einen elektrischen Ladungsspeicher gestützt, ist also mit anderen Worten vorzugsweise ein mittels zumindest eines elektrischen Ladungsspeichers gestütztes Gleichspannungsbordnetz.

Vorteilhaft ist es, wenn das zweite Bordnetz über mindestens ein Batterieladegerät an die Ausgangsseite zumindest eines Gleichspannungsstellers, insbesondere eines DC/DC-Wandlers, angeschlossen ist, dessen Eingangsseite mit dem Gleichspannungszwischenkreis verbunden ist.

Der zumindest eine elektrische Ladungsspeicher ist vorzugsweise eine Batterie.

Der elektrische Ladungsspeicher bzw. die Batterie ist vorzugsweise über das genannte Batterieladegerät oder ein anderes Batterieladegerät an die Ausgangsseite des Gleichspannungsstellers angeschlossen.

Der Gleichspannungssteller, das Batterieladegerät und ein Wechselrichter, der den Gleichspannungssteller und das Drehstrombordnetz koppelt, sind vorzugsweise integrale Bestandteile einer Hilfsbetriebeumrichtereinheit des Fahrzeugs.

Die Kühlmittelpumpe oder zumindest eine der Kühlmittelpumpen ist bevorzugt eine drehstrombetriebene Kühlmittelpumpe, die mittels eines Umrichters an das Gleichspannungsbordnetz angeschlossen ist.

Erfindungsgemäß weist das Fahrzeug eine Vielzahl an Kühlmittelpumpen auf, und jede der Kühlmittelpumpen oder zumindest eine Teilgruppe der Kühlmittelpumpen ist jeweils mittels eines eigenen Umrichters an das Gleichspannungsbordnetz angeschlossen.

Der oder die Umrichter werden vorzugsweise jeweils mittels des von derjenigen Kühlmittelpumpe gepumpten Kühlmittels gekühlt, die an den jeweiligen Umrichter angeschlossen ist.

Der oder die Umrichter erfüllen vorzugsweise einen vorgegebenen Sicherheitsintegritätslevel (SIL) von SIL1 oder besser.

Alternativ oder zusätzlich kann vorgesehen sein, dass die Kühlmittelpumpe oder zumindest eine der Kühlmittelpumpen eine gleichstrombetriebene, insbesondere bürstenlose, Kühlmittelpumpe ist, die unmittelbar an das Gleichspannungsbordnetz angeschlossen ist.

Der oder die gleichstrombetriebenen, bevorzugt bürstenlosen, Kühlmittelpumpen und/oder deren interne Logik erfüllen vorzugsweise den Sicherheitsintegritätslevel SIL1 oder besser.

Auch kann, alternativ oder zusätzlich, vorgesehen sein, dass das Fahrzeug zusätzlich zu dem zweiten Bordnetz ein drittes Bordnetz aufweist, das über zumindest einen Wechselrichter mit dem zweiten Bordnetz, dem oder den Batterieladegeräten und dem oder den Ladungsspeichern in Verbindung steht. Das dritte Bordnetz wird somit also vorzugsweise von dem zweiten Bordnetz und/oder dem oder den Batterieladegeräten und/oder dem oder den Ladungsspeichern gespeist.

Die zumindest eine Kühlmittelpumpe oder zumindest eine der Kühlmittelpumpen wird vorzugsweise von dem dritten Bordnetz gespeist.

Besonders vorteilhaft ist es, wenn das zweite Bordnetz insbesondere ein mittels zumindest eines elektrischen Ladungsspeichers gestütztes Gleichspannungsbordnetz ist und das dritte Bordnetz ein Drehstromnetz ist.

Das zweite Bordnetz wird vorzugsweise von zumindest zwei Gleichspannungsstellern, vorzugsweise jeweils über ein zwischengeschaltetes Batterieladegerät, gespeist, die jeweils von dem Gleichspannungszwischenkreis oder einem der Gleichspannungszwischenkreise des Fahrzeugs gespeist werden.

Das Fahrzeug weist besonders bevorzugt zwei oder mehr Hilfsbetriebeumrichtereinheiten auf, die jeweils als integrale Bestandteile einen Gleichspannungssteller, ein Batterieladegerät, einen Wechselrichter, der den oder einen der Gleichspannungszwischenkreise und das Drehstrombordnetz koppelt, und einen Wechselrichter, der das dritte Bordnetz mit Energie des zweiten Bordnetzes und/oder des oder der Batterieladegeräte und/oder des oder der Ladungsspeicher speist, aufweisen.

Der oder die Wechselrichter, die das dritte Bordnetz mit Energie des zweiten Bordnetzes und/oder des oder der Batterieladegeräte und/oder des oder der Ladungsspeicher speisen, erfüllen bevorzugt jeweils einen vorgegebenen Sicherheitsintegritätslevel von SIL1 oder besser.

Das Fahrzeug ist vorzugsweise mit zumindest einem Stromabnehmer zum Anschluss an ein streckenseitiges Energieversorgungsnetz ausgestattet.

Der Gleichspannungszwischenkreis steht vorzugsweise mit dem Stromabnehmer in Verbindung.

Das Fahrzeug kann ein oder mehr Gleichspannungszwischenkreise aufweisen, die jeweils dasselbe fahrzeugeigene Drehstrombordnetz, dasselbe zweite Bordnetz und so vorhanden dasselbe dritte Bordnetz speisen.

An jedes der Gleichspannungszwischenkreise können jeweils ein oder mehr Hilfsbetriebeumrichtereinheiten, ein oder mehr Batterien sowie ein oder mehr Kühlpumpen angeschlossen sein.

Der oder die Gleichspannungszwischenkreise sind vorzugsweise jeweils Bestandteile des Stromrichters, der zusätzlich zu dem jeweiligen Gleichspannungszwischenkreis einen Umrichter zum Anschluss an einen fahrzeugseitigen Stromabnehmer, falls vorteilhaft einen Transformator zwischen dem Stromabnehmer, den Umrichter und für jeden von dem Stromrichter zu speisenden Antriebsmotor jeweils einen Pulswechselrichter aufweisen kann.

Das fahrzeugeigene Drehstrombordnetz, das zweite Bordnetz und so vorhanden das dritte Bordnetz sind vorzugsweise jeweils fahrzeugübergreifende Netze, die beispielsweise von sich durch das gesamte Fahrzeug hindurch erstreckenden Stromleitungen- und/oder schienen gebildet werden.

Die Erfindung wird nachfolgend anhand von Ausführungsbeispielen näher erläutert; dabei zeigen beispielhaft
- Figur 1: Bestandteile eines ersten Ausführungsbeispiels für ein erfindungsgemäßes Fahrzeug, bei dem ein zweites Bordnetz in Form eines Gleichspannungsnetzes von einer Hilfsbetriebeumrichtereinheit gespeist wird und Kühlmittelpumpen gleichstrombetrieben sind,
- Figur 2: Bestandteile eines zweiten Ausführungsbeispiels für ein erfindungsgemäßes Fahrzeug, bei dem ein zweites Bordnetz in Form eines Gleichspannungsnetzes von zwei oder mehr Hilfsbetriebeumrichtereinheiten gespeist wird und Kühlmittelpumpen gleichstrombetrieben sind,
- Figur 3: Bestandteile eines dritten Ausführungsbeispiels für ein erfindungsgemäßes Fahrzeug, bei dem ein zweites Bordnetz in Form eines Gleichspannungsnetzes von zwei oder mehr Hilfsbetriebeumrichtereinheiten gespeist wird und Kühlmittelpumpen drehstrombetrieben sind,
- Figur 4: Bestandteile eines vierten Ausführungsbeispiels für ein erfindungsgemäßes Fahrzeug, bei dem ein zweites Bordnetz in Form eines Gleichspannungsnetzes und ein drittes Bordnetz in Form eines Drehstromnetzes vorhanden sind und Kühlmittelpumpen drehstrombetrieben sind, und
- Figur 5: Bestandteile eines fünften Ausführungsbeispiels für ein erfindungsgemäßes Fahrzeug, bei dem zwei oder mehr Stromrichter mit jeweils einem darin enthaltenen Gleichspannungszwischenkreis über zugeordnete Hilfsbetriebeumrichtereinheiten dasselbe zweite Bordnetz und dasselbe Drehstrombordnetz speisen, die sich durch das gesamte Fahrzeug erstrecken.

In den Figuren werden für identische oder vergleichbare Komponenten stets dieselben Bezugszeichen verwendet.

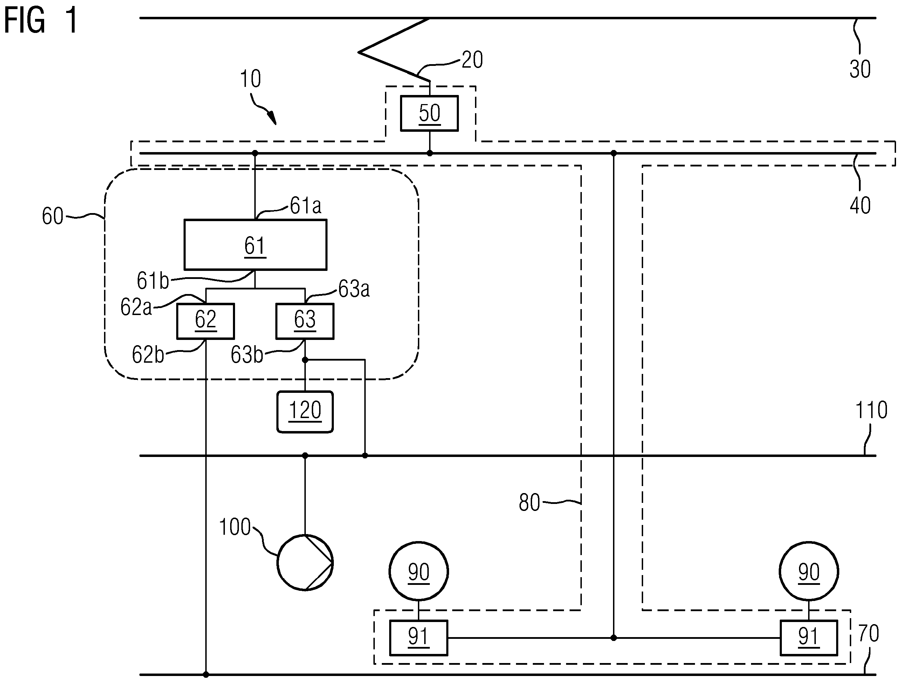

Die Figur 1 zeigt Bestandteile eines Ausführungsbeispiels für ein erfindungsgemäßes, elektrisch antreibbares Schienenfahrzeug 10. Das Schienenfahrzeug 10 ist über zumindest einen Stromabnehmer 20 an ein streckenseitiges Energieversorgungsnetz 30 angeschlossen.

Ein Gleichspannungszwischenkreis 40 des Schienenfahrzeugs 10 ist unmittelbar oder - wie in der Figur 1 gezeigt - mittelbar über einen zwischengeschalteten Umrichter 50 (sowie beispielsweise einen nicht gezeigten Transformator) an den Stromabnehmer 20 und damit an das streckenseitige Energieversorgungsnetz 30 angeschlossen.

Mit dem Gleichspannungszwischenkreis 40 steht eine Hilfsbetriebeumrichtereinheit 60 in Verbindung, die einen Gleichspannungssteller 61, einen Wechselrichter 62 und ein Batterieladegerät 63 umfasst. Die Eingangsseite 61a des Gleichspannungsstellers 61 ist an den Gleichspannungszwischenkreis 40 angeschlossen und wird von diesem mit Energie versorgt. Eine Ausgangsseite 61b des Gleichspannungsstellers 61 ist an die Eingangsseite 62a des Wechselrichters 62 und an die Eingangsseite 63a des Batterieladegeräts 63 angeschlossen.

Eine Ausgangsseite 62b des Wechselrichters 62 steht mit einem schienenfahrzeugeigenen Drehstrombordnetz 70 in Verbindung.

Antriebsmotoren 90 des Schienenfahrzeugs 10 werden von Pulswechselrichtern 91 angesteuert. Die Pulswechselrichter 91, der Umrichter 50 und der Gleichspannungszwischenkreis 40 sind bei dem Ausführungsbeispiel gemäß Figur 1 Bestandteile eines Stromrichters 80, der von in den Figuren nicht weiter gezeigtem Kühlmittel gekühlt wird, das von stromrichtereigenen oder zumindest stromrichterzugeordneten bzw. stromrichterindividuellen Kühlmittelpumpen 100 in nicht weiter gezeigten Kühlkreisläufen umgepumpt wird. Die Kühlmittelpumpen 100 sind gleichstrombetrieben und werden vorzugsweise von nicht weiter gezeigten bürstenlosen Gleichstrommotoren (sogenannten BLDC-Motoren) angetrieben.

Die gleichstrombetriebenen, bevorzugt bürstenlosen Kühlmittelpumpen 100 erfüllen vorzugsweise den Sicherheitsintegritätslevel SIL1 oder besser.

Die Kühlmittelpumpen 100 stehen mit einem zweiten Bordnetz 110 in Form eines Gleichspannungsbordnetzes des Schienenfahrzeugs 10 in Verbindung und werden von diesem zweiten Bordnetz 110 mit Energie versorgt. Das zweite Bordnetz 110 steht mit der Ausgangsseite 63b des Batterieladegeräts 63 in Verbindung, an das auch eine Batterie 120 angeschlossen ist.

Das zweite Bordnetz 110 wird durch die Batterie 120 stabilisiert und kann von dieser bei Ausfall des Batterieladegeräts 63 oder bei Ausfall der Energieversorgung des Batterieladegeräts 63 hilfsweise mit Energie versorgt werden. Die Energieversorgung der Kühlmittelpumpen 100 wird durch die Batterie 120 also abgesichert, da das zweite Bordnetz 110 batteriegestützt ist.

Die bürstenlosen Kühlmittelpumpen 100 erfüllen vorzugsweise den Sicherheitsintegritätslevel SIL1.

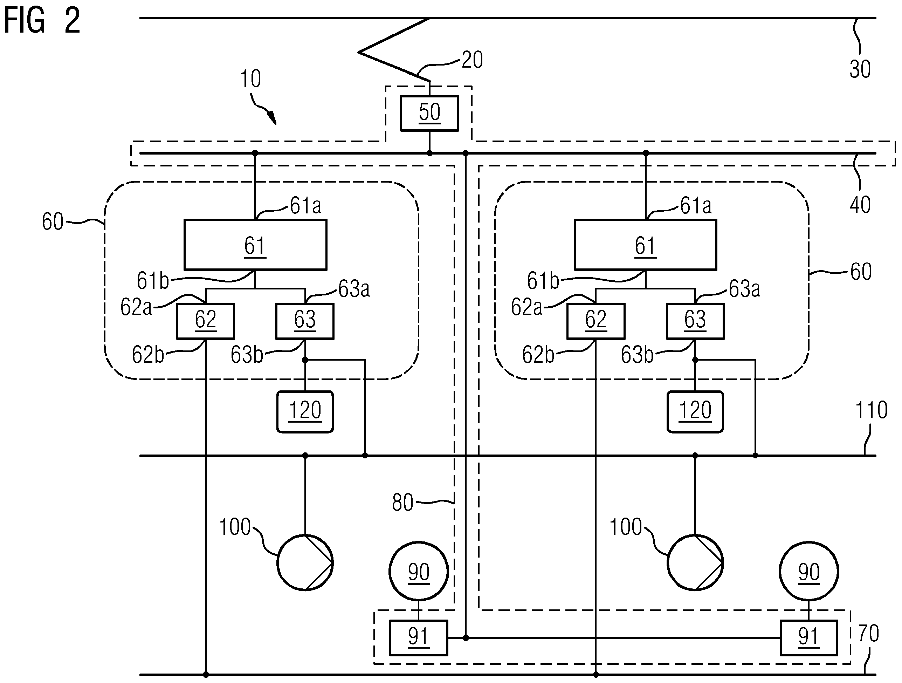

Die Figur 2 zeigt eine Ausführungsvariante des Ausführungsbeispiels gemäß Figur 1. Bei der Ausführungsvariante gemäß Figur 2 weist das Schienenfahrzeug 10 zwei oder mehr Hilfsbetriebeumrichtereinheiten 60 auf, die jeweils eingangsseitig an den Gleichspannungszwischenkreis 40 angeschlossen sind und von diesem mit Energie des streckenseitigen Energieversorgungsnetzes 30 versorgt werden. Die Hilfsbetriebeumrichtereinheiten 60 können vom Aufbau her vergleichbar oder identisch sein.

Die Hilfsbetriebeumrichtereinheiten 60 stehen ausgangsseitig jeweils mit dem zweiten Bordnetz 110 in Verbindung, wobei die Batterieladegeräte 63 der Hilfsbetriebeumrichtereinheiten 60 jeweils das zweite Bordnetz 110 speisen.

Jedes der Batterieladegeräte 63 ist mit seiner Ausgangsseite 63b außerdem mit einer Batterie 120 verbunden, die zu einer Stützung des zweiten Bordnetzes 110 dient, falls es zu einem Ausfall der eingangsseitigen Speisung der Batterieladegeräte 63 oder zu einem Ausfall der Batterieladegeräte 63 selbst kommt.

Im Übrigen gelten die obigen Ausführungen im Zusammenhang mit dem Ausführungsbeispiel gemäß Figur 1 entsprechend.

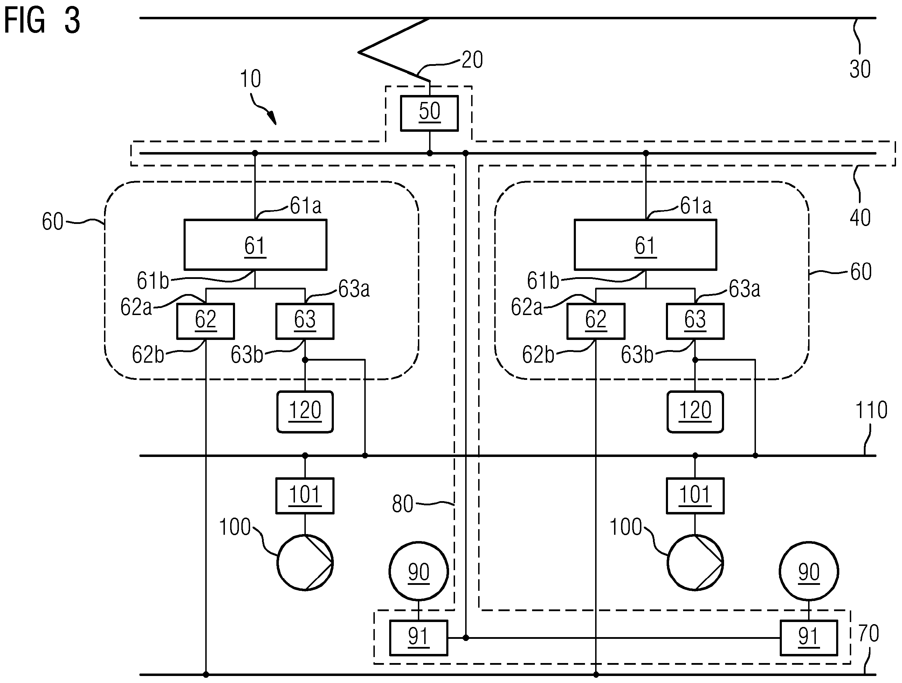

Die Figur 3 zeigt Bestandteile eines dritten Ausführungsbeispiels für ein erfindungsgemäßes Schienenfahrzeug 10. Bei dem dritten Ausführungsbeispiel gemäß Figur 3 sind die Kühlmittelpumpen 100 nicht gleichstrombetrieben, wie dies bei den Ausführungsbeispielen gemäß den Figuren 1 und 2 der Fall ist, sondern drehstrombetrieben und werden von nicht weiter gezeigten Drehstrommotoren angetrieben. Um einen Anschluss der drehstrombetriebenen Kühlmittelpumpen 100 an das zweite Bordnetz 110, bei dem es sich auch bei dem dritten Ausführungsbeispiel um ein Gleichspannungsnetz handelt, zu ermöglichen, ist den Kühlmittelpumpen 100 jeweils ein pumpeneigener Umrichter 101 vorgeordnet, der die vom zweiten Bordnetz 110 zur Verfügung gestellte Gleichspannung in eine zum Betrieb der Kühlmittelpumpen 100 geeignete Drehspannung umwandelt.

Die pumpeneigenen Umrichter 101 erfüllen vorzugsweise den Sicherheitsintegritätslevel SIL1.

Im Übrigen gelten die obigen Ausführungen im Zusammenhang mit den Ausführungsbeispielen gemäß Figur 1 und 2 für das Ausführungsbeispiel gemäß Figur 3 entsprechend.

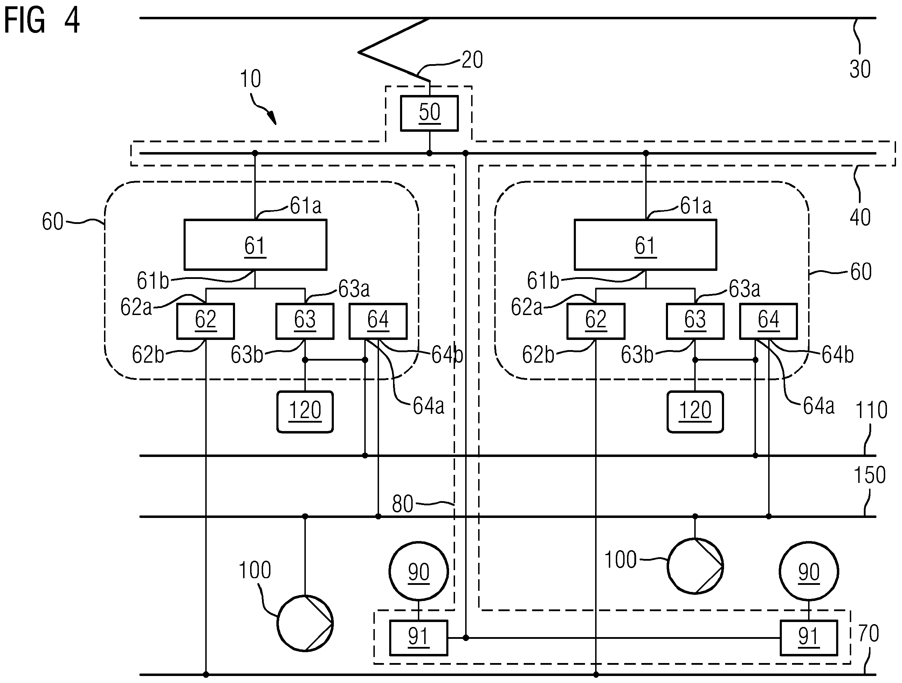

Die Figur 4 zeigt Bestandteile eines vierten Ausführungsbeispiels für ein erfindungsgemäßes Schienenfahrzeug 10. Bei dem Ausführungsbeispiel gemäß Figur 4 ist zusätzlich zu dem Drehstrombordnetz 70 und dem zweiten Bordnetz 110 ein drittes Bordnetz 150 vorhanden, das von den Hilfsbetriebeumrichtereinheiten 60 gespeist wird. Zu diesem Zweck weisen die Hilfsbetriebeumrichtereinheiten 60 jeweils zusätzlich zu ihrem Wechselrichter 62, mit dem das Drehstrombordnetz 70 gespeist wird und der nachfolgend auch erster Wechselrichter 62 genannt wird, einen zweiten Wechselrichter 64 auf, der mit seiner Eingangsseite 64a an die Ausgangsseite 63b des Batterieladegerätes 63 und damit an die Batterien 120 angeschlossen ist.

Die Ausgangsseite 64b des zweiten Wechselrichters 64 speist das dritte Bordnetz 150, das als Drehstromnetz ausgebildet ist und ein zweites Drehstrombordnetz bildet.

Die Kühlmittelpumpen 100, die zum Kühlen der Stromrichter 80 und vorzugsweise auch zum Kühlen der Antriebsmotoren 90 vorhanden sind, sind vorzugsweise drehstrombetriebene Kühlmittelpumpen, die an das dritte Bordnetz 150 angeschlossen und von diesem mit Energie versorgt werden.

Bei dem Ausführungsbeispiel gemäß Figur 4 dienen zum Speisen des dritten Bordnetzes 150 zwei oder vorzugsweise zumindest zwei Hilfsbetriebeumrichtereinheiten 60, um eine Redundanz im Falle eines Ausfalls einer der Hilfsbetriebeumrichtereinheiten 60 bzw. eines der zweiten Wechselrichter 64 der Hilfsbetriebeumrichtereinheiten 60 zu gewährleisten.

Die zweiten Umrichter 64 der Hilfsbetriebeumrichtereinheiten 60 erfüllen vorzugsweise einen Sicherheitsintegritätslevel von SIL1 oder besser.

Im Übrigen gelten die obigen Ausführungen im Zusammenhang mit den Ausführungsbeispielen gemäß den Figuren 1 bis 3 für das Ausführungsbeispiel gemäß Figur 4 entsprechend.

In den Figuren 1 bis 4 ist aus Gründen der Übersicht jeweils nur ein Gleichspannungszwischenkreis 40 und ein den Gleichspannungszwischenkreis 40 enthaltender Stromrichter 80 gezeigt. Das Schienenfahrzeug 10 kann ein oder mehr Gleichspannungszwischenkreise 40 aufweisen, die jeweils dasselbe fahrzeugeigene Drehstrombordnetz 70, dasselbe zweite Bordnetz 110 und so vorhanden dasselbe dritte Bordnetz 150 speisen. Jeder der Gleichspannungszwischenkreise 40 bzw. jeder der Stromrichter 80 kann an einen eigenen Stromabnehmer 20 angeschlossen sein; alternativ können sich Gleichspannungszwischenkreise 40 bzw. Stromrichter 80 auch Stromabnehmer 20 teilen.

An jedes der Gleichspannungszwischenkreise 40 können jeweils ein oder mehr Hilfsbetriebeumrichtereinheiten 60, ein oder mehr Batterien 120 sowie ein oder mehr Kühlpumpen 100 angeschlossen sein.

Das fahrzeugeigene Drehstrombordnetz 70, das zweite Bordnetz 110 und so vorhanden das dritte Bordnetz 150 sind vorzugsweise jeweils fahrzeugübergreifende Netze, die beispielsweise von sich durch das gesamte Schienenfahrzeug 10 hindurch erstreckenden Stromleitungen- und/oder schienen gebildet werden.

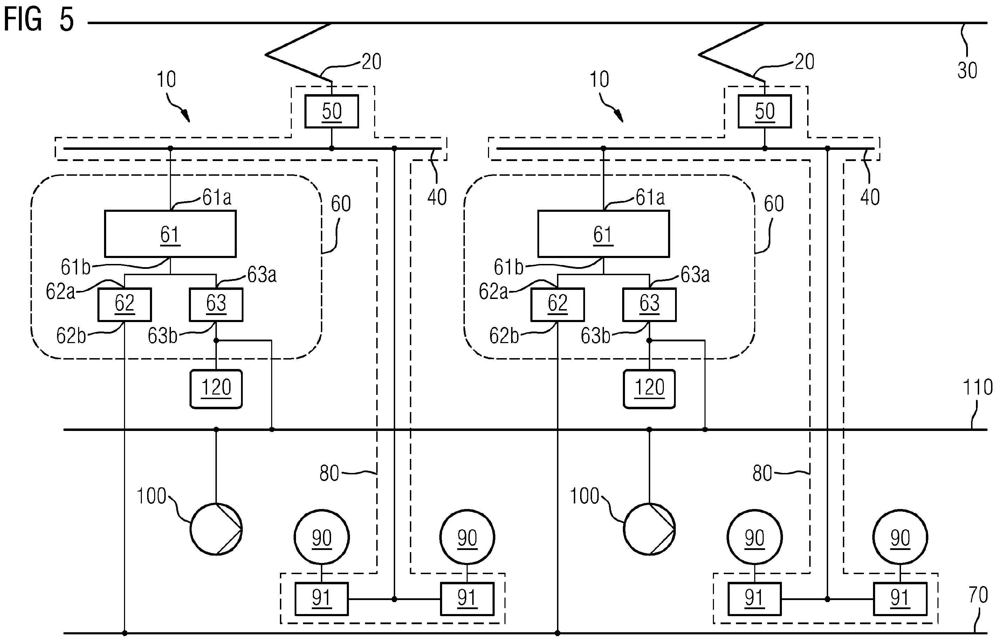

Die Figur 5 zeigt ein Ausführungsbeispiel, bei dem zwei oder mehr Stromrichter 80 mit jeweils einem darin enthaltenen (eigenen bzw. individuellen) Gleichspannungszwischenkreis 40 über zugeordnete Hilfsbetriebeumrichtereinheiten 60 dasselbe zweite Bordnetz 110 und dasselbe Drehstrombordnetz 70 speisen. Das zweite Bordnetz 110 und das Drehstrombordnetz 70 erstrecken sich durch das gesamte Fahrzeug 10 hindurch.

Bei dem Ausführungsbeispiel gemäß Figur 5 sind die Stromrichter 80 an denselben Stromabnehmer 20 angeschlossen; alternativ können sie auch an eigene Stromabnehmer 20 angeschlossen sein. Vorteilhaft ist es, wenn zwischen Stromrichter 80 und Stromabnehmer 20 ein Transformator (nicht gezeigt) zur Spannungsreduktion zwischengeschaltet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 20: Stromabnehmer
- 30: Energieversorgungsnetz
- 40: Gleichspannungszwischenkreis
- 50: Umrichter
- 60: Hilfsbetriebeumrichtereinheit
- 61: Gleichspannungssteller
- 61a: Eingangsseite
- 61b: Ausgangsseite
- 62: Wechselrichter
- 62a: Eingangsseite
- 62b: Ausgangsseite
- 63: Batterieladegerät
- 63a: Eingangsseite
- 63b: Ausgangsseite
- 64: Wechselrichter
- 64a: Eingangsseite
- 64b: Ausgangsseite
- 70: Drehstrombordnetz
- 80: Stromrichter
- 90: Antriebsmotor
- 91: Pulswechselrichter
- 100: Kühlmittelpumpe
- 101: Umrichter
- 110: zweites Bordnetz
- 120: Batterie
- 150: drittes Bordnetz

## Patentansprüche

1. Elektrisch antreibbares Fahrzeug, insbesondere Schienenfahrzeug (10), mit
- zumindest einem Gleichspannungszwischenkreis (40),
- einem von dem Gleichspannungszwischenkreis (40) gespeisten fahrzeugeigenen Drehstrombordnetz (70),
- zumindest einem über einen Stromrichter (80) gespeisten Antriebsmotor und
- zumindest einer Kühlmittelpumpe (100) zum Pumpen eines den Stromrichter (80) kühlenden Kühlmittels,
**dadurch gekennzeichnet, dass**
- das Fahrzeug zusätzlich zu dem schienenfahrzeugeigenen Drehstrombordnetz (70) ein zweites Bordnetz (110) aufweist, wobei das zweite Bordnetz (110) ein Gleichspannungsbordnetz ist, und
- das Fahrzeug eine Vielzahl an Kühlmittelpumpen (100) aufweist, wobei die Kühlmittelpumpen (100) an das zweite Bordnetz (110) angeschlossen sind und wobei jede der Kühlmittelpumpen (100) oder zumindest eine Teilgruppe der Kühlmittelpumpen (100) jeweils mittels eines eigenen Umrichters (101) an das Gleichspannungsbordnetz angeschlossen ist.

2. Fahrzeug nach Anspruch 1,
**dadurch gekennzeichnet, dass**
- das zweite Bordnetz (110) ein mittels zumindest eines elektrischen Ladungsspeichers gestütztes Gleichspannungsbordnetz (110) ist,
- das zweite Bordnetz (110) über mindestens ein Batterieladegerät (63) an die Ausgangsseite (61b) zumindest eines Gleichspannungsstellers (61) angeschlossen ist, dessen Eingangsseite (61a) mit dem Gleichspannungszwischenkreis (40) verbunden ist, und
- der zumindest eine elektrische Ladungsspeicher, der vorzugsweise eine Batterie (120) ist, über ein oder das genannte Batterieladegerät (63) an die Ausgangsseite (61b) des Gleichspannungsstellers (61) angeschlossen ist.

3. Fahrzeug nach Anspruch 2,
**dadurch gekennzeichnet, dass**
der Gleichspannungssteller (61), das Batterieladegerät (63) und ein Wechselrichter (62), der den Gleichspannungssteller (61) und das Drehstrombordnetz (70) koppelt, integrale Bestandteile einer Hilfsbetriebeumrichtereinheit (60) des Fahrzeugs sind.

4. Fahrzeug nach einem der voranstehenden Ansprüche,
**dadurch gekennzeichnet, dass**
die Kühlmittelpumpe (100) oder zumindest eine der Kühlmittelpumpen (100) eine drehstrombetriebene Kühlmittelpumpe (100) ist, die mittels des Umrichters (101) an das Gleichspannungsbordnetz angeschlossen ist.

5. Fahrzeug nach Anspruch 1 oder 4,
**dadurch gekennzeichnet, dass**
der oder die Umrichter (101) jeweils mittels des von derjenigen Kühlmittelpumpe (100) gepumpten Kühlmittels gekühlt werden, die an den jeweiligen Umrichter (101) angeschlossen ist.

6. Fahrzeug nach Anspruch 1, 4 oder 5,
**dadurch gekennzeichnet, dass** der oder die Umrichter (101) einen vorgegebenen Sicherheitsintegritätslevel von SIL1 oder besser erfüllen.

7. Fahrzeug nach einem der voranstehenden Ansprüche,
**dadurch gekennzeichnet, dass**
die Kühlmittelpumpe (100) oder zumindest eine der Kühlmittelpumpen (100) eine gleichstrombetriebene, insbesondere bürstenlose, Kühlmittelpumpe (100) ist, die unmittelbar an das Gleichspannungsbordnetz angeschlossen ist und vorzugsweise, insbesondere mit Blick auf ihre interne Logik, den Sicherheitsintegritätslevel SIL1 oder besser erfüllt.

8. Fahrzeug nach einem der voranstehenden Ansprüche,
**dadurch gekennzeichnet, dass**
- das Fahrzeug zusätzlich zu dem zweiten Bordnetz (110) ein drittes Bordnetz (150) aufweist, das über zumindest einen Wechselrichter (62) mit dem zweiten Bordnetz (110), dem oder den Batterieladegeräten (63) und dem oder den Ladungsspeichern in Verbindung steht, und
- die zumindest eine Kühlmittelpumpe (100) oder zumindest eine der Kühlmittelpumpen (100) von dem dritten Bordnetz (150) gespeist wird.

9. Fahrzeug nach Anspruch 8,
**dadurch gekennzeichnet, dass**
- das zweite Bordnetz (110) ein insbesondere ein mittels zumindest eines elektrischen Ladungsspeichers gestütztes Gleichspannungsbordnetz ist, und
- das dritte Bordnetz (150) ein Drehstromnetz ist.

10. Fahrzeug nach einem der voranstehenden Ansprüche,
**dadurch gekennzeichnet, dass**
das zweite Bordnetz (110) von zumindest zwei Gleichspannungsstellern (61), vorzugsweise jeweils über ein zwischengeschaltetes Batterieladegerät (63), gespeist wird, die jeweils von dem Gleichspannungszwischenkreis (40) oder einem der Gleichspannungszwischenkreise des Fahrzeugs gespeist werden.

11. Fahrzeug nach Anspruch 8 oder 9,
**dadurch gekennzeichnet, dass**
das Fahrzeug zwei oder mehr Hilfsbetriebeumrichtereinheiten (60) aufweist, die jeweils als integrale Bestandteile einen Gleichspannungssteller (61), ein Batterieladegerät (63), einen Wechselrichter (62), der den oder einen der Gleichspannungszwischenkreise und das Drehstrombordnetz (70) koppelt, und einen Wechselrichter (64), der das dritte Bordnetz (150) mit Energie des zweiten Bordnetzes und/oder des oder der Batterieladegeräte und/oder des oder der Ladungsspeicher speist, aufweist.

12. Fahrzeug nach Anspruch 11,
**dadurch gekennzeichnet, dass**
der oder die Wechselrichter (64), die das dritte Bordnetz (150) mit Energie des zweiten Bordnetzes (110) und/oder des oder der Batterieladegeräte (63) und/oder des oder der Ladungsspeicher speisen, jeweils einen vorgegebenen Sicherheitsintegritätslevel von SIL1 oder besser erfüllen.

13. Fahrzeug nach einem der voranstehenden Ansprüche,
**dadurch gekennzeichnet, dass**
- das Fahrzeug mit zumindest einem Stromabnehmer (20) zum Anschluss an ein streckenseitiges Energieversorgungsnetz (30) ausgestattet ist und
- der Gleichspannungszwischenkreis (40) mit dem Stromabnehmer (20) in Verbindung steht.

## Claims

1. Electrically drivable vehicle, in particular rail vehicle (10), with
- at least one intermediate DC circuit (40),
- an in-vehicle three-phase AC on-board electrical system (70) fed by the intermediate DC circuit (40),
- at least one drive motor fed via a current converter (80), and
- at least one coolant pump (100) for pumping a coolant that cools the current converter (80),
**characterised in that**
- the vehicle has a second on-board electrical system (110) in addition to the in-rail-vehicle three-phase AC electrical system (70), wherein the second on-board electrical system (110) is a DC voltage on-board electrical system, and
- the vehicle has a plurality of coolant pumps (100), wherein the coolant pumps (100) are connected to the second on-board electrical system (110) and wherein each of the coolant pumps (100) or at least a subgroup of the coolant pumps (100) is connected in each case by means of a separate converter (101) to the DC voltage on-board electrical system.

2. Vehicle according to claim 1,
**characterised in that**
- the second on-board electrical system (110) is a DC voltage on-board electrical system (110) backed up by means of at least one electrical charge storage device,
- the second on-board electrical system (110) is connected via at least one battery charger (63) to the output side (61b) of at least one DC chopper (61), the input side (61a) of which is connected to the intermediate DC circuit (40), and
- the at least one electrical charge storage device, which is preferably a battery (120), is connected via a or said battery charger (63) to the output side (61b) of the DC chopper (61).

3. Vehicle according to claim 2,
**characterised in that**
the DC chopper (61), the battery charger (63) and an inverter (62) that couples the DC chopper (61) and the three-phase AC on-board electrical system (70) are integral components of an auxiliary converter unit (60) of the vehicle.

4. Vehicle according to one of the preceding claims,
**characterised in that**
the coolant pump (100) or at least one of the coolant pumps (100) is preferably a three-phase AC-operated coolant pump (100) that is connected by means of the converter (101) to the DC voltage on-board electrical system (110).

5. Vehicle according to claim 1 or 4,
**characterised in that**
the converter or converters (101) are cooled in each case by means of the coolant pumped by the coolant pump (100) connected to the respective converter (101).

6. Vehicle according to claim 1, 4 or 5,
**characterised in that**
the converter or converters (101) fulfil a predetermined safety integrity level of SIL1 or better.

7. Vehicle according to one of the preceding claims,
**characterised in that**
the coolant pump (100) or at least one of the coolant pumps (100) is a DC-operated, in particular brushless coolant pump (100) that is connected directly to the DC voltage on-board electrical system and preferably, in particular with regard to its internal logic, fulfils safety integrity level SIL1 or better.

8. Vehicle according to one of the preceding claims,
**characterised in that**
- the vehicle has a third on-board electrical system (150) in addition to the second on-board electrical system (110), which third on-board electrical system is connected via at least one inverter (62) to the second on-board electrical system (110), the battery charger or chargers (63), and the charge storage device or devices, and
- the at least one coolant pump (100) or at least one of the coolant pumps (100) is preferably fed by the third on-board electrical system (150).

9. Vehicle according to claim 8,
**characterised in that**
- the second on-board electrical system (110) is in particular a DC voltage on-board electrical system backed up by means of at least one electrical charge storage device, and
- the third on-board electrical system (150) is a three-phase AC electrical system.

10. Vehicle according to one of the preceding claims,
**characterised in that**
the second on-board electrical system (110) is fed by at least two DC choppers (61), preferably in each case via a battery charger (63) disposed therebetween, which are fed in each case by the intermediate DC circuit (40) or one of the intermediate DC circuits of the vehicle.

11. Vehicle according to claim 8 or 9,
**characterised in that**
the vehicle has two or more auxiliary converter units (60), which in each case have as integral components a DC chopper (61), a battery charger (63), an inverter (62) that couples the intermediate DC circuit or one of the intermediate DC circuits and the three-phase AC on-board electrical system (70), and an inverter (64) that feeds the third on-board electrical system (150) with power from the second on-board electrical system and/or from the battery charger or chargers and/or from the charge storage device or devices.

12. Vehicle according to claim 11,
**characterised in that**
the inverter or inverters (64) that feed the third on-board electrical system (150) with power from the second on-board electrical system (110) and or from the battery charger or chargers (63) and/or from the charge storage device or devices fulfil a predetermined safety integrity level of SIL1 or better in each case.

13. Vehicle according to one of the preceding claims,
**characterised in that**
- the vehicle is equipped with at least one current collector (20) for connection to a trackside power supply system (30), and
- the intermediate DC circuit (40) is connected to the current collector (20).

## Revendications

1. Véhicule à traction électrique, en particulier véhicule (10) ferroviaire, comprenant
- au moins un circuit (40) intermédiaire à tension continue,
- un réseau (70) de bord à courant triphasé propre au véhicule et alimenté par le circuit (40) intermédiaire à tension continue,
- au moins un moteur d'entraînement alimenté par un convertisseur (80) et
- au moins une pompe (100) de fluide réfrigérant pour le pompage d'un fluide réfrigérant refroidissant le convertisseur (80),
**caractérisé en ce que**
- le véhicule a, en plus du réseau (70) de bord à courant triphasé propre au véhicule ferroviaire, un deuxième réseau (110) de bord, dans lequel le deuxième réseau (110) de bord est un réseau de bord à tension continue, et
- le véhicule a une pluralité de pompes (100) de fluide réfrigérant, dans lequel les pompes (100) de fluide réfrigérant sont raccordées au deuxième réseau (110) de bord et dans lequel chacune des pompes (100) de fluide réfrigérant ou du moins un groupe partiel des pompes (100) de fluide réfrigérant est raccordé au réseau de bord à tension continue respectivement au moyen de son propre convertisseur (101).

2. Véhicule suivant la revendication 1,
**caractérisé en ce que**
- le deuxième réseau (110) de bord est un réseau (110) de bord à tension continue soutenu au moyen d'au moins un accumulateur de charge électrique,
- le deuxième réseau (110) de bord est, par au moins un appareil (63) de charge de batterie, raccordé au côté (61b) de sortie d'au moins un régleur (61) de tension continue, dont le côté (61a) d'entrée est connecté au circuit (40) intermédiaire à tension continue, et
- le au moins un accumulateur de charge électrique, qui est de préférence une batterie (120), est, par un ou par l'appareil (63) de charge de batterie mentionné, raccordé au côté (61b) de sortie du régleur (61) de tension continue.

3. Véhicule suivant la revendication 2,
**caractérisé en ce que**
le régleur (61) de tension continue, l'appareil (63) de charge de batterie et un onduleur (62), qui connecte le régleur (61) de tension continue et le réseau (70) de bord à courant triphasé, sont des parties constitutives intégrales d'une unité (60) de convertisseur de fonctionnement auxiliaire du véhicule.

4. Véhicule suivant l'une des revendications précédentes,
**caractérisé en ce que**
la pompe (100) de fluide réfrigérant ou du moins l'une des pompes (100) de fluide réfrigérant est une pompe (100) de fluide réfrigérant fonctionnant par courant triphasé, qui est raccordée au réseau de bord à tension continue au moyen du convertisseur (101).

5. Véhicule suivant la revendication 1 ou 4,
**caractérisé en ce que**
le ou les convertisseurs (101) sont refroidis respectivement au moyen du fluide réfrigérant pompé par la pompe (100) respective de fluide réfrigérant, qui est raccordée au convertisseur (101) respectif.

6. Véhicule suivant la revendication 1, 4 ou 5,
**caractérisé en ce que**
le ou les convertisseurs (101) satisfont un niveau d'intégrité de sécurité donné à l'avance de SIL1 ou mieux.

7. Véhicule suivant l'une des revendications précédentes,
**caractérisé en ce que**
les pompes (100) de fluide réfrigérant ou du moins l'une des pompes (100) de fluide réfrigérant est une pompe (100) de fluide réfrigérant fonctionnant en courant continu, en particulier sans balai, qui est raccordée directement au réseau de bord à tension continue et, de préférence, en particulier au vu de sa logique interne, satisfait le niveau SIL1 d'intégrité de sécurité ou mieux.

8. Véhicule suivant l'une des revendications précédentes,
**caractérisé en ce que**
- le véhicule a, en plus du deuxième réseau (110) de bord, un troisième réseau (150) de bord, qui est, par au moins un onduleur (62), en liaison avec le deuxième réseau (110) de bord, le ou les appareils (63) de charge de batterie et le ou les accumulateurs de charge, et
- la au moins une pompe (100) de fluide réfrigérant ou du moins l'une des pompes (100) de fluide réfrigérant est alimentée par le troisième réseau (150) de bord.

9. Véhicule suivant la revendication 8,
**caractérisé en ce que**
- le deuxième réseau (110) de bord est un réseau de bord à tension continue, en particulier soutenu au moyen d'au moins un accumulateur de charge électrique, et
- le troisième réseau (150) de bord est un réseau à courant triphasé.

10. Véhicule suivant l'une des revendications précédentes,
**caractérisé en ce que**
le deuxième réseau (110) de bord est alimenté par au moins deux régleurs (61) de tension continue, de préférence respectivement par un appareil (63) de charge de batterie interposé, qui sont alimentés respectivement par le circuit (40) intermédiaire à tension continue ou par l'un des circuits intermédiaires à tension continue du véhicule.

11. Véhicule suivant la revendication 8 ou 9,
**caractérisé en ce que**
le véhicule a deux ou plusieurs unités (60) de convertisseur de fonctionnement auxiliaires, qui comportent respectivement, comme partie constitutive intégrale, un régleur (61) de tension continue, un appareil (63) de charge de batterie, un onduleur (62), qui connecte le ou l'un des circuits intermédiaires à tension continue et le réseau (70) de bord à courant triphasé et un onduleur (64), qui alimente le troisième réseau (150) de bord en énergie du deuxième réseau de bord et/ou du ou des appareils de charge de batterie et/ou de ou des accumulateurs de charge.

12. Véhicule suivant la revendication 11,
**caractérisé en ce que**
le ou les onduleurs (64), qui alimentent le troisième réseau (150) de bord en énergie du deuxième réseau (110) de bord et/ou du ou des appareils (63) de charge de batterie et/ou des accumulateurs de charge, satisfont respectivement un niveau d'intégrité de sécurité donné à l'avance de SIL1 ou mieux.

13. Véhicule suivant l'une des revendications précédentes,
**caractérisé en ce que**
- le véhicule est équipé d'au moins d'un appareil (20) de prise de courant pour le raccordement à un réseau (30) d'alimentation en énergie sur la voie et
- le circuit (40) intermédiaire à tension continue est en liaison avec l'appareil (20) de prise de courant.
